# FASCICULE DE BREVET EUROPEEN

(11) **EP 2 444 319 B1**
(45) Date de publication et mention de la délivrance du brevet: **15.04.2015**
(21) Numéro de dépôt: 11306361.4
(22) Date de dépôt: 21.10.2011
(51) Int. Cl.: B64D 1/02, B64D 7/08

(54) **Système de distribution d'un gaz d'actionnement destiné à alimenter un actionneur pneumatique, ensemble d'éjection et procédé de distribution associé**
Verteilungssystem eines Antriebsgases zur Versorgung eines pneumatischen Stellantriebs, Auswurfeinheit und entsprechendes Verteilungsverfahren
System for distributing an actuation gas intended for supplying a pneumatic actuator, ejection unit and related distribution method

(30) Priorité: 22.10.2010 FR 1004159
(43) Date de publication de la demande: 25.04.2012
(73) Titulaire: DASSAULT AVIATION, F-75008 Paris (FR)
(72) Inventeur: Loison, Renaud, 75010 Paris (FR)
(74) Mandataire: Blot, Philippe Robert Emile

(56) Documents cités:
- FR-A1- 2 316 652
- FR-A1- 2 712 676
- GB-A- 2 054 052
- US-A- 2 937 899
- US-A- 3 074 320
- US-A- 4 043 525
- US-A- 4 246 472
- US-A- 5 605 043

## Description

La présente invention concerne un système de distribution d'un gaz d'actionnement selon le préambule de la revendication 1.

Un tel système est destiné par exemple à déplacer un actionneur linéaire dans un éjecteur d'emport porté par un aéronef. L'emport est par exemple une charge militaire de type bombe ou missile, ou encore un engin volant, tel qu'un drone.

Pour éjecter l'emport, il est connu d'utiliser principalement une pression pneumatique, afin de déplacer l'actionneur permettant l'éloignement de l'emport à partir de l'aéronef.

Pour engendrer la pression pneumatique, des bouteilles contenant un gaz pressurisé réchauffé, tel que de l'azote, sont parfois utilisées. Toutefois, de telles bouteilles sont très encombrantes sur un aéronef.

Alternativement, il est connu d'utiliser des systèmes pyrotechniques dans lesquels une charge pyrotechnique (une poudre ou un propergol par exemple) se décompose de manière thermochimique pour engendrer un gaz de commande.

Lorsque la charge pyrotechnique est mise à feu, la pression de gaz augmente progressivement. Cette pression est immédiatement transmise à l'actionneur pour lancer la séquence d'éjection de l'emport.

Toutefois, un tel système présente le désavantage d'être sensible aux conditions initiales de température et de pression de la charge pyrotechnique qui fait varier la pression de fonctionnement du système, notamment lorsque la charge est très froide.

En outre, la bonne combustion de la charge pyrotechnique est dépendante de la pression engendrée. Si la pression engendrée est trop faible, la combustion est incomplète, ce qui engendre de nombreuses particules imbrûlées et des résidus de combustion.

Pour pallier ce problème, il est connu d'embarquer une quantité de charge pyrotechnique plus importante que celle qui serait nécessaire dans des conditions contrôlées de température et de pression. En outre, des moyens de régulation de la pression engendrée par la charge existent. La demande FR 2 316 652 décrit ainsi un système de régulation permettant d'assurer que la pression appliquée sur l'actionneur ne dépasse pas un seuil donné.

US 4,043,525-A décrit un système de distribution de gaz d'actionnement entre deux sorties. US 3,074,320-A, US 4,246,472-A et US 5,605,043-A décrivent des systèmes de distribution de gaz d'actionnement comportant un organe de sécurité.

Un but de l'invention est d'obtenir un système de distribution de gaz de commande alimenté par une source pyrotechnique de gaz, qui optimise les performances de la source et l'éjection de la charge, de manière simple et sûre.

Un autre but de l'invention est d'assurer le fonctionnement d'un tel système avec une sécurité maximale, notamment en cas de déclenchement intempestif de la charge pyrotechnique.

A cet effet, l'invention a pour objet un système selon la revendication 1.

Le système selon l'invention peut comprendre l'une ou plusieurs des caractéristiques des revendications 2 à 11.

L'invention a également pour objet un ensemble d'éjection selon la revendication 12.

L'invention a en outre pour objet un procédé selon la revendication 13.

Le procédé selon l'invention peut comprendre les caractéristiques des revendications 14 et 15.

L'invention sera mieux comprise à la lecture de la description qui va suivre, donnée uniquement à titre d'exemple, et faite en se référant aux dessins annexés, sur lesquels :
- la figure 1 est une vue schématique d'un premier aéronef comportant un ensemble d'éjection selon l'invention ;
- la figure 2 est une vue en perspective de trois-quarts face du système de distribution de l'ensemble de la figure 1 ;
- la figure 3 est une vue en coupe partielle, prise suivant un plan vertical médian, du distributeur du système de la figure 2 ;
- la figure 4 est une vue analogue à la figure 3, dans une première phase de fonctionnement de l'ensemble d'éjection ;
- la figure 5 est une vue analogue à la figure 3, dans une deuxième phase de fonctionnement de l'ensemble d'éjection ;
- la figure 6 est une vue analogue à la figure 3, lors du déclenchement des moyens d'évacuation d'urgence du gaz d'actionnement ; et
- la figure 7 illustre la pression régnant respectivement dans la chambre de réception et dans la chambre de sortie du distributeur de la figure 2, en fonction du temps, lors de l'éjection d'un emport.

Dans tout ce qui suit, les termes « amont » et « aval » s'entendent par rapport au sens normal de circulation d'un fluide lors de l'éjection de l'emport. Les pressions sont des pressions relatives prises par rapport à la pression atmosphérique régnant autour de l'ensemble d'éjection.

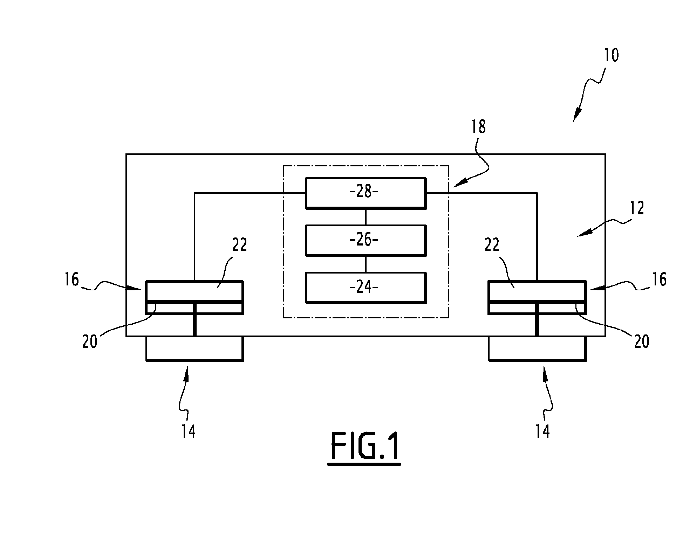

Un aéronef 10 muni d'un premier ensemble d'éjection 12 selon l'invention est représenté schématiquement sur la figure 1.

L'aéronef 10 porte au moins un emport 14 qui est destiné à être éjecté à l'écart de l'aéronef 10 par l'ensemble d'éjection 12 lorsque l'aéronef 10 est en vol.

Dans l'exemple représenté sur la figure 1, l'aéronef 10 comporte une pluralité d'emports 14. Chaque emport 14 est formé par une charge militaire telle qu'une bombe ou un missile. En variante, l'emport 14 est un engin volant tel qu'un drone.

L'ensemble d'éjection 12 comporte au moins un actionneur pneumatique 16 permettant l'éloignement de l'emport 14 à l'écart de l'aéronef 10, l'actionneur 16 étant actionné par une pression pneumatique. L'ensemble d'éjection 12 comporte en outre un premier système de distribution 18 selon l'invention, destiné à engendrer et à distribuer un gaz d'actionnement généré à partir d'une source pyrotechnique de gaz.

L'actionneur 16 comporte un vérin qui comprend au moins un organe déployable 20 reçu dans une chambre 22. La fourniture du gaz d'actionnement sous pression appliqué sur l'organe déployable 20 dans la chambre 22 permet de déplacer à grande vitesse l'organe déployable 20 depuis une position rétractée de repos vers une position déployée d'éjection de l'emport 14.

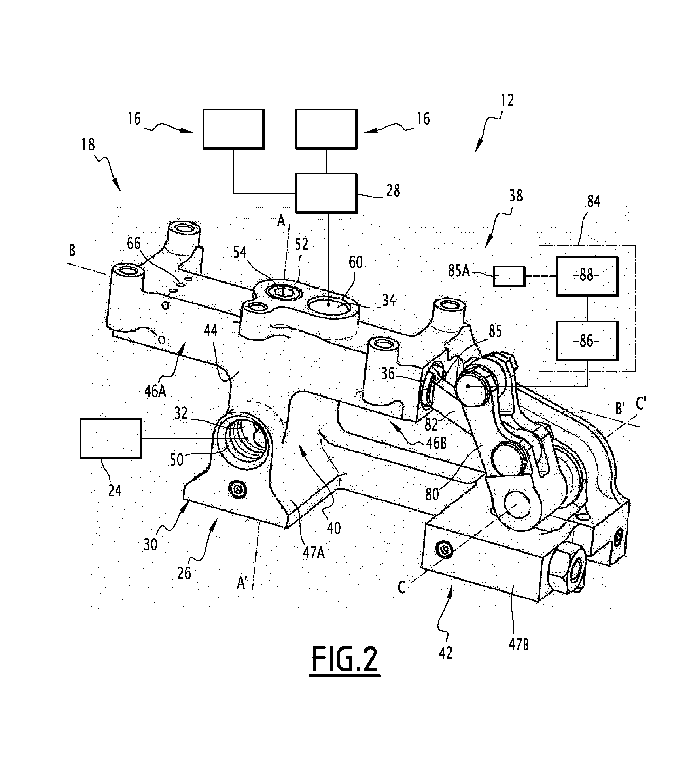

Comme illustré par les figures 1 et 2, le système de distribution 18 comporte un générateur pyrotechnique 24 de gaz d'actionnement et un distributeur 26. Avantageusement, dans le cas où l'ensemble d'éjection 12 comprend une pluralité d'actionneurs 16, le système de distribution 18 comporte un répartiteur 28 permettant de répartir le gaz d'actionnement entre les différents actionneurs 16.

Le générateur 24 comprend une charge pyrotechnique (non représentée). Cette charge est propre à se décomposer thermochimiquement pour engendrer de manière très rapide, par exemple dans un temps inférieur à 20 ms, un volume substantiel de gaz d'actionnement par exemple supérieur à 1500 fois le volume de la charge. La source pyrotechnique est par exemple une poudre simple ou double base propre à se décomposer thermochimiquement à haute pression et à haute température, par exemple à une pression supérieure à 200 bars et à une température supérieure à 700°C.

Le générateur pyrotechnique 24 comporte en outre un organe d'ignition (non représenté) qui initie la décomposition thermochimique de la charge sur réception d'un premier ordre de mise à feu émis par un occupant de l'aéronef ou depuis le sol.

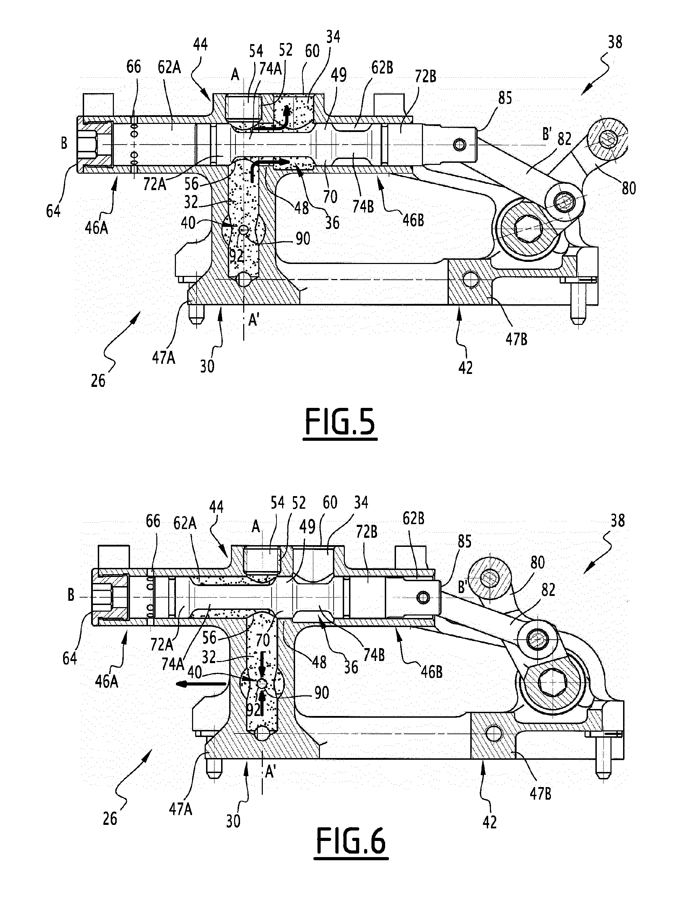

Comme représenté sur les figures 2 et 6, le distributeur 26 comporte un corps creux 30 délimitant une chambre amont 32 de réception du gaz d'actionnement et une chambre aval 34 de sortie. Le distributeur 26 comprend en outre un organe mobile 36 d'obturation du passage de gaz entre la chambre amont 32 et la chambre aval 34.

Selon l'invention, le distributeur 26 comprend des moyens 38 de commande du déplacement de l'organe mobile 36. Avantageusement, le distributeur 26 comporte aussi des moyens 40 d'évacuation d'urgence du gaz d'actionnement contenu dans la chambre amont 32, qui seront décrits en détail plus bas.

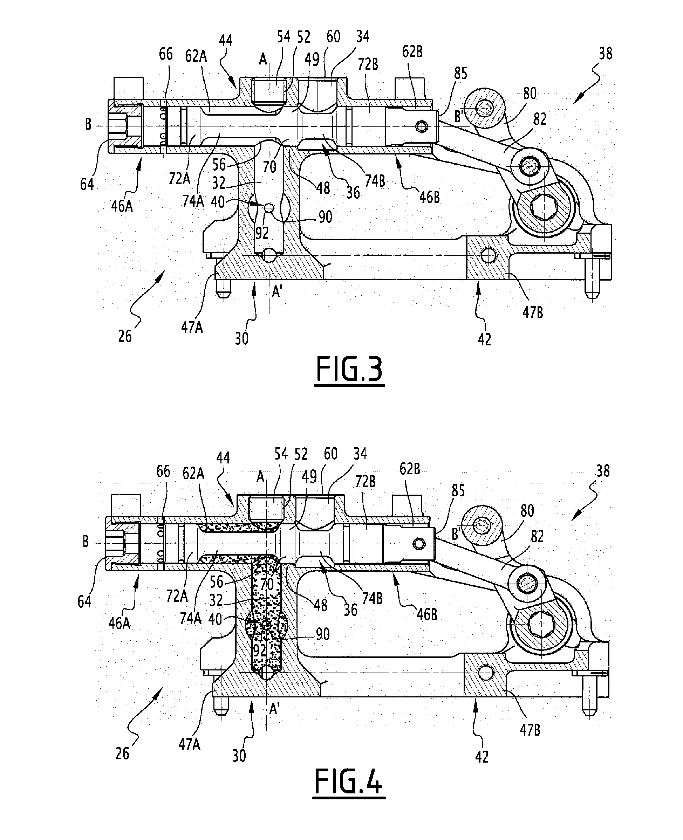

Comme illustré par les figures 2 et 3, le corps creux 30 comporte un socle 42 destiné à être fixé sur une surface de réception définie par l'aéronef 10, un conduit 44 de circulation du gaz d'actionnement entre le générateur pyrotechnique 24 et le répartiteur 28 et des chemises 46A, 46B de guidage de l'organe mobile 36 prolongeant latéralement le conduit de circulation 44.

Dans cet exemple, le corps creux 30 est réalisé d'un seul tenant en étant venu de matière, par exemple à base d'un acier inoxydable résistant à la pression, par exemple en acier de type Z8CND1704 ou tout alliage gardant des propriétés de résilience à froid du même ordre que l'alliage précité.

Le socle 42 comprend une région 47A de support du conduit de circulation 44 et une région 47B de support des moyens de commande 38. La région 47B fait saillie latéralement par rapport à la région 47A.

Le conduit de circulation 44 définit intérieurement la chambre amont 32 et la chambre aval 34. Comme on le verra plus bas, et de façon générale, en raison de la présence des moyens d'évacuation 40, les épaisseurs maximales des constituants mécaniques sont réduites, ce qui allège le système 18, tout en garantissant sa sécurité.

Le conduit de circulation 44 comporte une paroi intermédiaire 48 séparant la chambre amont 32 de la chambre aval 34. La paroi intermédiaire 48 définit une ouverture intermédiaire 49 de communication entre la chambre amont 32 et la chambre aval 34.

Le conduit de circulation 44 présente une forme allongée suivant un axe longitudinal A-A' qui s'étend verticalement sur la figure 2.

La chambre amont 32 de réception du gaz d'actionnement s'étend longitudinalement le long de l'axe A-A'. Elle débouche transversalement par une ouverture amont 50 d'arrivée de gaz, visible sur la Figure 2. L'ouverture amont 50 est raccordée au générateur pyrotechnique 24.

Dans cet exemple, la chambre amont 32 débouche en aval par une ouverture axiale 52 obturée par un bouchon démontable 54. Au voisinage de l'ouverture intermédiaire 49, la chambre amont 32 comporte une gorge annulaire 56 de révolution autour d'un axe B-B' perpendiculaire à l'axe A-A' de la chambre amont 32. Cette gorge 56 contribue à assurer l'étanchéité dynamique entre la chambre amont 32 et la chambre aval 34 lorsque l'organe mobile 36 obture l'ouverture intermédiaire 49, comme on le verra plus bas.

Dans cet exemple, la chambre aval 34 s'étend parallèlement à la chambre amont 32, en regard longitudinalement d'une partie aval de la chambre amont 32. Elle débouche transversalement en amont dans l'ouverture intermédiaire 49. La chambre aval 34 s'ouvre en aval par une ouverture 60 de sortie de gaz d'actionnement, raccordée hydrauliquement à l'actionneur 16, par l'intermédiaire du répartiteur 28, lorsqu'il est présent.

Les chemises de guidage 46A, 46B s'étendent de part et d'autre du conduit de circulation 44, sensiblement transversalement par rapport à l'axe A-A'.

Chaque chemise 46A, 46B délimite un passage intérieur 62A, 62B respectif de guidage de l'organe mobile 36. Les passages 62A, 62B débouchent respectivement dans la chambre amont 32 et dans la chambre aval 46. Ils s'étendent coaxialement le long d'un même axe B-B' de déplacement de l'organe mobile 20. Cet axe B-B' est également commun avec l'axe B-B' de la gorge 56.

Le passage amont 62A défini par la chemise 46A est raccordé à la chambre amont 32. Il est obturé à l'extrémité libre de la chemise 46A par un bouchon 64.

La chemise 46A délimite en outre, au voisinage de l'extrémité libre, une pluralité d'orifices traversants 66 d'égalisation de pression débouchant dans le passage amont 62A dans un espace de ce passage isolé des chambres 32 et 34 par l'organe mobile 36. En effet bien que cet espace soit isolé des chambres 32 et 34 il peut exister un léger débit de fuite autour de la tête de l'organe mobile, ces orifices 66 empêchant ainsi à cet espace d'être soumis à une surpression qui serait générée par ce débit de fuite.

Le passage aval 62B défini par la chemise 46B est raccordé en amont à la chambre aval 34. Il débouche à l'extrémité libre de la chemise 46B.

L'organe mobile d'obturation 36 est formé dans cet exemple par un tiroir monté mobile dans le corps creux 30. L'organe 36 est monté mobile dans le corps 30 entre une position de confinement du gaz d'actionnement dans la chambre amont 32, et une position de distribution du gaz d'actionnement sous pression contenu dans la chambre amont 32 vers la chambre aval 34.

Dans cet exemple, l'organe mobile 36 est monté mobile en translation le long de l'axe B-B' à travers le passage de guidage 62A, une partie aval de la chambre amont 32, l'ouverture intermédiaire 49, une partie amont de la chambre aval 34 et à travers le passage de guidage 62B.

L'organe mobile 20 comporte un tronçon central 70 d'obturation de l'ouverture intermédiaire 49. Il comporte en outre un tronçon amont 72A de guidage, un tronçon aval 72B de guidage et des tronçons intermédiaires 74A, 74B de passage de gaz raccordant le tronçon central 70 respectivement aux tronçons de guidage 72A et 72B.

Le tronçon central 70 présente une section transversale sensiblement conjuguée à la section transversale de l'ouverture intermédiaire 49. Il présente une longueur légèrement supérieure à la longueur de l'ouverture intermédiaire 49, prise le long de l'axe B-B'.

Les tronçons de guidage 72A, 72B présentent des sections transversales, prises perpendiculairement à l'axe B-B', sensiblement conjuguées aux sections transversales intérieures des passages 62A, 62B respectifs.

Chaque tronçon intermédiaire 74A, 74B comporte une section transversale inférieure à la section transversale du tronçon central 70 par exemple au moins inférieure à 5% de la section transversale du tronçon central 70.

Dans la position de confinement, représentée sur la figure 3, le tronçon central 70 est disposé dans l'ouverture intermédiaire 49 et obture de manière sensiblement étanche cette ouverture 49.

Le passage du gaz d'actionnement depuis la chambre amont 32 vers la chambre aval 34 est empêché.

Le tronçon intermédiaire amont 74A s'étend en partie dans le passage de guidage 62A et dans la chambre amont 32. Le tronçon intermédiaire aval 74B s'étend dans la chambre aval 34.

Dans la position de distribution, le tronçon central d'obturation 70 a été déplacé le long de l'axe B-B' vers l'aval jusqu'au passage aval 62B dans la chemise de guidage aval 46B.

Le tronçon intermédiaire 74A s'étend à travers la gorge 56 dans la chambre amont 32, à travers l'ouverture intermédiaire 49 et à travers la partie amont de la chambre aval 34.

Le gaz d'actionnement est alors libre de circuler depuis la chambre amont 32 à travers l'ouverture 49 autour de l'organe mobile 26, pour atteindre la chambre aval 34.

L'organe mobile 36 est avantageusement réalisé en acier inoxydable. La surface extérieure de l'organe mobile 36 est traitée, par exemple par un traitement de surface, notamment un dépôt de carbone adamantin permettant de résister aux phénomènes d'abrasion et de corrosion des gaz pyrotechniques. Ainsi, la surface extérieure de l'organe mobile 36 peut présenter une dureté de surface comprise entre 600 Vickers et 4000 Vickers.

Selon l'invention, les moyens de commande 38 sont actionnables indépendamment du gaz d'actionnement s'appliquant sur l'organe mobile 36.

Ainsi, ces moyens de commande 38 sont distincts du gaz d'actionnement, de sorte qu'ils sont aptes à déplacer l'organe mobile 26 indépendamment de ce gaz d'actionnement, et même en l'absence de gaz d'actionnement s'appliquant sur l'organe mobile 36.

Dans l'exemple représenté sur les Figures 2 à 5, les moyens de commande 38 comportent un bras de commande 80, un organe intermédiaire de liaison 82 entre le bras de commande 80 et l'organe mobile 20 et un ensemble actif d'actionnement comportant un actionneur 84 de déplacement du bras de commande 80 et des moyens 85A de réception d'un ordre d'ouverture du système de régulation.

Dans cet exemple, le bras de commande 80 est monté rotatif sur la région de support 47B du socle, autour d'un axe C-C' sensiblement transversal par rapport à l'axe B-B' de déplacement de l'organe mobile 36.

Le bras 80 est pivotable autour de l'axe C-C' entre une position de repos relativement rapprochée de l'organe mobile 36, visible sur les Figures 2 et 3, et une position d'actionnement, relativement éloignée de l'organe mobile 36, visible sur la Figure 5.

L'organe intermédiaire 82 comporte une bielle articulée d'une part, à une extrémité libre 85 de l'organe mobile 20 et, d'autre part, sur le bras de commande 80.

L'organe intermédiaire 82 est propre à transposer le mouvement rotatif du bras 80 en un mouvement de translation de l'organe mobile 36 entre sa position de confinement et sa position de distribution.

L'actionneur 84 est par exemple un actionneur mécanique. En référence à la Figure 2, il comporte un organe mécanique 86 de sollicitation élastique du bras 80 vers sa position de distribution, et un organe d'immobilisation 88 du bras 80 dans sa position de repos à l'encontre de l'organe de sollicitation élastique 86.

L'organe de sollicitation élastique 86 est taré, de sorte qu'il contrôle la vitesse de déplacement de l'organe mobile 20 le long de sa course lorsque l'organe d'immobilisation 88 a été libéré. Ceci permet de contrôler précisément le débit de gaz circulant entre la chambre amont 32 et la chambre aval 34, qui est délivré à l'actionneur 16.

L'organe d'immobilisation 88 est libérable sur réception d'un deuxième ordre d'ouverture du système de régulation 18, distinct et postérieur au premier ordre de mise à feu par les moyens de réception 85A. Le deuxième ordre est par exemple émis automatiquement après un temps prédéterminé suivant l'émission du premier ordre, ou/et lorsque des paramètres physiques, tels que la température ou/et la pression dans la chambre 32 atteignent une valeur seuil donnée.

Lorsque l'organe d'immobilisation 88 est libéré, l'organe de sollicitation élastique 86 est libre de ramener le bras 80 vers sa position d'actionnement, provoquant ainsi le déplacement de l'organe mobile 36 depuis sa position de confinement vers sa position de distribution.

Les moyens de réception 85A sont propres à laisser l'actionneur 84 inactif tant que le deuxième ordre n'est pas reçu et à activer l'actionneur sur réception du deuxième ordre.

Ainsi, avant réception du deuxième ordre d'ouverture, et même après réception du premier ordre de mise à feu par le générateur pyrotechnique 24, l'actionneur 84 est inactif et l'organe mobile 36 reste dans sa position de confinement. L'ensemble d'actionnement est dans un état inactif.

Après réception du deuxième ordre d'ouverture par les moyens de réception 85A, l'actionneur 84 est activé pour déplacer l'organe mobile 36 vers sa position de distribution. L'ensemble d'actionnement passe dans un état activé d'actionnement de l'organe mobile d'obturation 36 vers la position de distribution.

En référence à la Figure 2, les moyens d'évacuation 40 comprennent un conduit 90 d'évacuation de gaz, distinct de l'ouverture intermédiaire 49, et un organe 92 d'obturation libérable du conduit 90.

Le conduit d'évacuation 90 raccorde la chambre amont 32 à l'extérieur du corps 30, à travers le corps 30. Il débouche transversalement dans une partie amont de la chambre amont 32, avantageusement au voisinage de l'ouverture amont 50.

L'organe d'obturation 92 est formé par exemple par un clapet taré. Ce clapet est libérable lorsque la pression dans la chambre 32 atteint une valeur seuil, par exemple supérieure à 1500 bars. Dans cet exemple, et pour des raisons de sécurité, l'organe d'obturation 92 est libérable de manière irréversible depuis sa configuration d'obturation du canal 90 vers sa configuration d'évacuation.

Le fonctionnement du premier ensemble d'éjection 12 selon l'invention va maintenant être décrit.

Initialement, l'emport 14 est chargé sur l'aéronef 10. L'actionneur 16 est raccordé à l'emport 14 et l'organe déployable 20 est rétracté.

Dans le système de distribution 18, l'organe mobile d'obturation 36 occupe sa position de confinement, telle que représentée sur la figure 3.

Le générateur pyrotechnique 24 est alors monté sur l'aéronef 10 et est raccordé hydrauliquement à la chambre amont 32 de réception.

Lorsque l'emport 14 doit être séparé de l'aéronef 10, un premier ordre de mise à feu, en vue d'activer la génération de gaz de commande, est transmis au générateur pyrotechnique 24.

L'organe d'ignition active alors la charge, ce qui engendre sa décomposition thermochimique pour engendrer du gaz d'actionnement.

Le gaz d'actionnement s'échappe alors hors du générateur 24 jusqu'à la chambre de réception 32, à travers l'ouverture amont 50.

Les moyens de commande 38 maintiennent l'organe mobile 36 dans sa position de confinement. A cet effet, le tronçon central d'obturation 70 de l'organe 36 obture totalement l'ouverture intermédiaire 49, empêchant le passage du gaz d'actionnement vers la chambre aval 34.

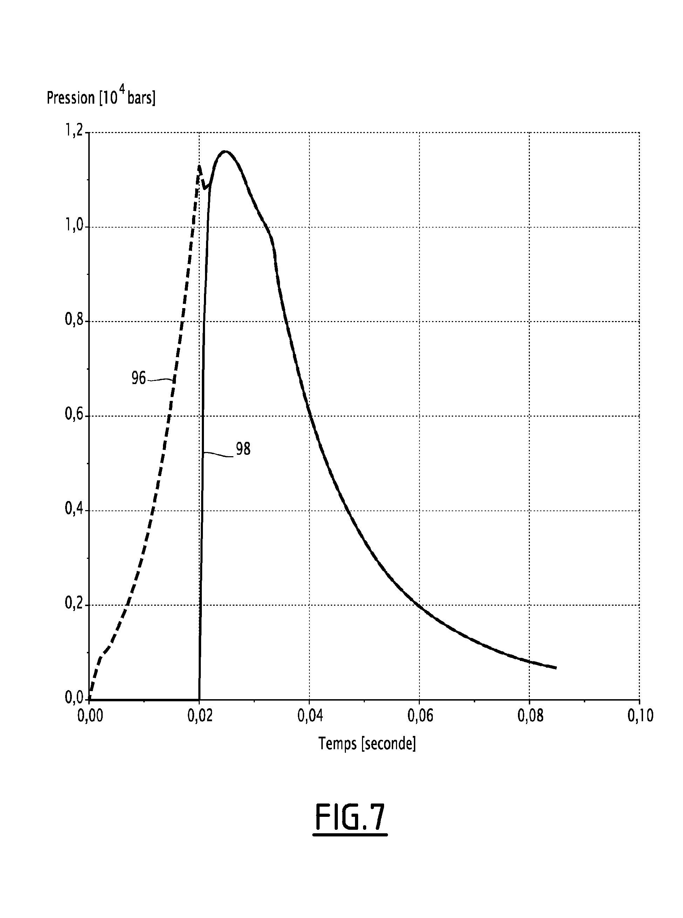

Comme illustré par la courbe 96 en pointillés sur la Figure 7, la pression de gaz dans la chambre amont 32 augmente donc très rapidement jusqu'à une valeur supérieure à 200 bars, et notamment supérieure à 400 bars. La pression relative dans la chambre aval 34, représentée par la courbe 98 en trait plein sur la Figure 7, reste sensiblement nulle.

Compte tenu de la pression très élevée qui règne en amont de l'organe mobile 36, la combustion pyrotechnique de la charge se déroule dans des conditions optimales. Ceci diminue notablement la génération de particules polluantes et des composés non brûlés. En outre, le générateur 16 présente une sensibilité réduite à la température ambiante régnant autour de l'éjecteur 12.

Au bout d'un temps donné, par exemple égal à 20 ms, un deuxième ordre d'ouverture du système de régulation 18 est transmis aux moyens de commande 38.

En réponse à cet ordre, l'organe d'immobilisation 82 de l'actionneur 84 est libéré. Sous l'effet de l'organe de sollicitation élastique 86, le bras de commande 80 se déplace vers sa position d'actionnement.

Le profil de déplacement temporel de l'organe mobile 36 est contrôlé par la nature de l'organe de sollicitation 86. Ceci définit un profil de débit gazeux fourni à l'actionneur 16 qui peut être totalement indépendant du profil de génération de gaz pyrotechnique par le générateur pyrotechnique.

Lors du déplacement de l'organe mobile 36, le tronçon central d'obturation 70 se déplace vers la chambre aval 34. Un passage est ouvert pour le gaz d'actionnement sous pression contenu dans la chambre amont 32 à travers l'ouverture intermédiaire 49. Le gaz d'actionnement circule donc autour du tronçon intermédiaire 76A, comme indiqué sur la figure 5 et rejoint la chambre aval 34.

Le gaz d'actionnement est ensuite réparti entre les actionneurs 16 par l'intermédiaire du répartiteur 28 lorsque celui-ci est présent. Le gaz actionne alors l'organe déployable 20 pour provoquer son passage en position déployée, et l'éjection de l'emport 14.

Le système de distribution 18 selon l'invention optimise donc la combustion pyrotechnique en augmentant la pression de génération du gaz par confinement de ce gaz dans la chambre amont 32. Le rendement énergétique du système 18 est grandement amélioré, ce qui supprime les imbrûlés et produit une meilleure qualité de combustion. La quantité de charge pyrotechnique disposée dans le générateur 24 peut ainsi être minimisée.

En outre, le profil de fourniture du gaz d'actionnement à chaque actionneur 16 est totalement indépendant de l'allumage pyrotechnique obtenu. Ceci permet de s'affranchir de la température initiale de la charge contenue dans le générateur 24 pour assurer une force d'éjection suffisante, quelles que soient les conditions de température et de pression régnant à l'extérieur de l'aéronef.

La géométrie intérieure du distributeur 26, et notamment la disposition relative des chambres 32, 34 permet de garantir une étanchéité dynamique avec le flux de gaz pyrotechnique dans la chambre amont 32, malgré les pressions impliquées, sans utilisation de joints d'étanchéité friables.

En outre, la sécurité du système de distribution 18 est garantie. A cet effet, si une ignition intempestive de la charge se produit, par exemple lors d'un foudroiement ou d'une décharge électrostatique, les moyens de commande 38 restent inactifs. Dans ce cas, l'organe mobile 36 reste dans sa position de confinement, ce qui empêche le gaz d'actionnement de parvenir jusqu'à l'actionneur 16 et évite que l'emport 14 ne soit éjecté de manière incontrôlée.

Les risques de dommages lors d'essais au sol sont grandement diminués et le risque de largage de manière incontrôlée en vol de l'emport 14 est quasiment supprimé.

En outre, compte tenu de la présence des moyens d'évacuation 40, si la pression dans la chambre amont 32 augmente au-delà d'une valeur seuil donnée, l'organe d'obturation 92 s'ouvre de manière irréversible. Le gaz d'actionnement est évacué vers l'atmosphère à travers le conduit d'évacuation 90. Le risque d'éclatement du corps 30 du distributeur 26 est donc grandement réduit. Il est possible de concevoir un distributeur 26 avec une paroi nominale de faible épaisseur pouvant supporter une pression maximale de 2000 bars environ, ce qui allège le système 18 et diminue son encombrement.

La sécurité est en outre garantie par l'irréversibilité de la déformation de l'organe d'obturation 92, une fois cet organe 92 libéré.

Dans une variante, l'organe mobile 36 présente une section transversale cylindrique ou prismatique. Il reste déplaçable en translation le long de l'axe B-B'. En variante, l'organe mobile 36 est déplaçable en rotation autour de l'axe B-B' entre sa position de confinement et sa position de distribution.

Dans une autre variante, l'actionneur 84 est un actionneur électrique. A cet effet, il comporte des moyens d'asservissement du bras de commande 80 pour le déplacer suivant un profil temporel de déplacement prédéterminé, par exemple programmé dans une mémoire. L'asservissement peut être réalisé en commandant la vitesse de déplacement du bras 80 au moyen de l'actionneur électrique.

Dans encore une autre variante, l'organe d'obturation 92 du conduit d'évacuation 90 est formé par un système de détendeur irréversible, tel qu'un système à bille, dans lequel le retour de la bille est rendu impossible une fois l'ouverture du conduit 90 réalisée.

Comme il résulte directement et sans ambigüité de la description ci-dessus, dans la position de confinement, l'organe mobile d'obturation 36 est conformé pour que le gaz d'actionnement s'accumule dans la chambre amont 32, sans pouvoir sortir de cette chambre.

## Revendications

1. Système (18) de distribution d'un gaz d'actionnement destiné à alimenter un actionneur pneumatique (16), du type comprenant :
- un générateur pyrotechnique (24) de gaz d'actionnement ;
- un distributeur (26) comportant :
• un corps (30) définissant une chambre amont (32) de réception du gaz d'actionnement raccordée au générateur pyrotechnique (24) et une chambre aval (34) de sortie destinée à être raccordée hydrauliquement à l'actionneur pneumatique (16) ;
• un organe mobile d'obturation (36) déplaçable dans le corps (30) entre une première position et une position de distribution du gaz d'actionnement depuis la chambre amont (32) vers la chambre aval (34), le distributeur (26) comprenant des moyens (38) de commande du déplacement de l'organe mobile d'obturation (36) entre sa première position et sa position de distribution,
**caractérisé en ce que** la première position est une position de confinement du gaz d'actionnement dans la chambre amont (32), lesdits moyens (38) de commande étant propres à déplacer l'organe mobile d'obturation (36) indépendamment du gaz d'actionnement s'appliquant sur l'organe mobile d'obturation (36),
et **en ce que** les moyens de commande (38) sont aptes à maintenir l'organe mobile d'obturation (36) dans sa position de confinement après réception d'un premier ordre de mise à feu dans lequel le générateur pyrotechnique (24) de gaz d'actionnement est activé pour engendrer du gaz d'actionnement, puis sont aptes à être activés sur réception d'un deuxième ordre d'ouverture, indépendant du gaz d'actionnement s'appliquant sur l'organe mobile d'obturation (36) pour déplacer l'organe mobile d'obturation (36) depuis sa position de confinement vers sa position de distribution.

2. Système (18) selon la revendication 1, **caractérisé en ce que** les moyens de commande (38) comportent un ensemble actif d'actionnement propre à être commandé indépendamment du gaz d'actionnement, entre un état inactif de maintien de l'organe mobile d'obturation (36) dans sa position de confinement et un état activé d'actionnement de l'organe mobile d'obturation (36) vers la position de distribution.

3. Système (18) selon l'une quelconque des revendications précédentes, **caractérisé en ce que** l'ensemble actif d'actionnement comporte un actionneur mécanique (84).

4. Système (18) selon la revendication 3, **caractérisé en ce que** l'actionneur mécanique (84) comporte un organe de sollicitation élastique (86) de l'organe mobile d'obturation (36) vers sa position de distribution et un organe libérable (88) d'immobilisation de l'organe mobile d'obturation (36) dans sa position de confinement à l'encontre de l'organe de sollicitation élastique (86).

5. Système selon l'une quelconque des revendications 1 ou 2, **caractérisé en ce que** l'ensemble actif d'actionnement (84) comporte un actionneur électrique de pilotage du déplacement de l'organe mobile d'obturation (36).

6. Système selon l'une quelconque des revendications 2 à 5, **caractérisé en ce que** l'ensemble actif d'actionnement comprend des moyens d'asservissement propres à piloter le mouvement de l'organe mobile d'obturation (36) entre sa position de confinement et sa position de distribution suivant un profil de déplacement prédéterminé.

7. Système (18) selon l'une quelconque des revendications précédentes, **caractérisé en ce que** les moyens de commande (38) comportent un bras rotatif (80) monté sur le corps (30), et un organe intermédiaire de liaison (82) articulé d'une part sur le bras rotatif (80) et d'autre part sur l'organe mobile d'obturation (36).

8. Système (18) selon l'une quelconque des revendications précédentes, **caractérisé en ce que** la chambre amont (32) est raccordée à la chambre aval (34) par une ouverture intermédiaire (49) délimitée dans le corps, l'organe mobile d'obturation (36) étant monté mobile à travers l'ouverture intermédiaire (49).

9. Système (18) selon la revendication 8, **caractérisé en ce que** l'organe mobile d'obturation (36) comprend un tronçon d'obturation (70), de section transversale sensiblement conjuguée à la section transversale de l'ouverture intermédiaire (49) et un tronçon de liaison (74A, 74B), de section transversale inférieure à la section transversale de l'ouverture intermédiaire (49), le tronçon d'obturation (70) étant disposé dans l'ouverture intermédiaire (49) dans la position de confinement, le tronçon de liaison (74A, 74B) étant disposé dans l'ouverture intermédiaire (49) dans la position de distribution.

10. Système (18) selon la revendication 9, **caractérisé en ce que** le corps comprend une chemise (46A, 46B) de guidage de l'organe mobile d'obturation, l'organe mobile d'obturation comprenant un tronçon de guidage (72A, 72B), le tronçon intermédiaire (74A, 74B) étant disposé entre le tronçon de guidage (72A, 72B) et le tronçon d'obturation (70).

11. Système (18) selon l'une quelconque des revendications précédentes, **caractérisé en ce que** le corps (30) délimite un conduit (90) d'évacuation d'urgence du gaz d'actionnement dans la position de confinement de l'organe mobile d'obturation (36), le conduit d'évacuation d'urgence (90) débouchant dans la chambre amont (32), le distributeur (26) comprenant un organe libérable (92) de fermeture du conduit d'évacuation d'urgence (92) propre à se libérer au-delà d'une pression donnée dans la chambre amont (32) lorsque l'organe mobile d'obturation (36) occupe sa position de confinement.

12. Ensemble d'éjection (12) d'un emport (14) porté par un aéronef (10), comprenant :
- un actionneur pneumatique (16) d'éjection de l'emport (14);
- un système (18) de distribution de gaz d'actionnement selon l'une quelconque des revendications précédents, la chambre aval (34) étant raccordée hydrauliquement à l'actionneur pneumatique (16).

13. Procédé de distribution d'un gaz d'actionnement destiné à alimenter un actionneur pneumatique (16), comprenant les étapes suivantes :
- fourniture d'un système (18) selon l'une quelconque des revendications 1 à 11;
- sur réception d'un premier ordre de mise à feu, activation du générateur pyrotechnique (24) de gaz d'actionnement pour engendrer du gaz d'actionnement ;
- fourniture du gaz d'actionnement dans la chambre amont (32), l'organe mobile d'obturation (26) occupant sa position de confinement ;
- sur réception d'un deuxième ordre d'ouverture indépendant du gaz d'actionnement s'appliquant sur l'organe mobile d'obturation (26), activation des moyens de commande (38) pour déplacer l'organe mobile d'obturation (26) depuis sa position de confinement vers sa position de distribution ;
- passage du gaz d'actionnement depuis la chambre amont (32) vers la chambre aval (34).

14. Procédé selon la revendication 13, **caractérisé en ce que** les moyens de commande (38) maintiennent l'organe mobile d'obturation (36) dans sa position de confinement jusqu'à ce que la pression dans la chambre amont (32) atteigne une valeur au moins supérieure à 200 bars, le deuxième ordre d'ouverture étant donné lorsque la pression est supérieure à 200 bars.

15. Procédé selon la revendication 14, **caractérisé en ce que** le corps (30) délimite un conduit (90) d'évacuation d'urgence du gaz d'actionnement dans la position de confinement de l'organe mobile d'obturation (36), le conduit d'évacuation d'urgence (90) débouchant dans la chambre amont (32), le distributeur (26) comprenant un organe libérable (92) de fermeture de la conduite d'évacuation d'urgence (90) propre à se libérer au-delà d'une pression donnée dans la chambre amont (32) lorsque l'organe mobile d'obturation (36) occupe sa position de confinement,
le procédé comprenant la libération de l'organe libérable de fermeture (92) et l'évacuation du gaz de commande sous pression contenu dans la chambre amont (32) vers l'atmosphère à travers la conduite d'évacuation d'urgence (90), l'organe d'obturation mobile (36) restant dans sa position de confinement.

## Patentansprüche

1. System (18) zum Ausgeben eines Antriebsgases, das zum Versorgen eines pneumatischen Antriebs (16) vorgesehen ist, des Typs, der aufweist:
- einen pyrotechnischen Antriebsgasgenerator (24),
- eine Ausgabevorrichtung (26), aufweisend:
• einen Körper (30), der definiert: eine Stromaufwärtskammer (32) zum Aufnehmen des Antriebsgases, die mit dem pyrotechnischen Generator (24) verbunden ist, und eine Stromabwärtsausgangskammer (34), die vorgesehen ist, um hydraulisch mit dem pneumatischen Antrieb (16) verbunden zu sein,
• ein bewegbares Verschlusselement (36), das in dem Körper (30) zwischen einer ersten Position und einer Position zum Ausgeben des Antriebsgases aus der Stromaufwärtskammer (32) an die Stromabwärtskammer (34) bewegbar ist, wobei die Ausgabevorrichtung (26) Mittel (38) zum Steuern der Bewegung des bewegbaren Verschlusselements (36) zwischen seiner ersten Position und seiner Ausgabeposition aufweist,
**dadurch gekennzeichnet, dass** die erste Position eine Position zum Einschließen des Antriebsgases in der Stromaufwärtskammer (32) ist, wobei die Steuermittel (38) in der Lage sind, das bewegbare Verschlusselement (36) unabhängig von dem Antriebsgas, das auf das bewegbare Verschlusselement (36) einwirkt, zu bewegen,
und dass die Steuermittel (38) in der Lage sind, das bewegbare Verschlusselement (36) nach dem Empfangen eines ersten Zündbefehls, bei dem der pyrotechnische Antriebsgasgenerator (24) aktiviert wird, um Antriebsgas zu generieren, in seiner Einschließposition zu halten, und anschließend in der Lage sind, bei Empfangen eines zweiten Öffnungsbefehls unabhängig von dem Antriebsgas, das auf das bewegbare Verschlusselement (36) einwirkt, aktiviert zu werden, um das bewegbare Verschlusselement (36) aus seiner Einschließposition in seine Ausgabeposition zu bewegen.

2. System (18) gemäß Anspruch 1, **dadurch gekennzeichnet, dass** die Steuermittel (38) eine aktive Antriebseinheit aufweisen, die in der Lage ist, unabhängig von dem Antriebsgas zwischen einem inaktiven Zustand des Haltens des bewegbaren Verschlusselements (36) in seiner Einschließposition und einem aktivierten Antriebszustand des bewegbaren Verschlusselements (36) in seine Ausgabeposition gesteuert zu werden.

3. System (18) gemäß irgendeinem der vorhergehenden Ansprüche, **dadurch gekennzeichnet, dass** die aktive Antriebseinheit einen mechanischen Antrieb (84) aufweist.

4. System (18) gemäß Anspruch 3, **dadurch gekennzeichnet, dass** der mechanische Antrieb (84) aufweist: ein Element zur Federbelastung (86) des bewegbaren Verschlusselements (36) in seine Ausgabeposition und ein lösbares Element (88) zum Immobilisieren des bewegbaren Verschlusselements (36) in seiner Einschließposition gegenüber dem Federbelastungselement (86).

5. System gemäß irgendeinem der Ansprüche 1 oder 2, **dadurch gekennzeichnet, dass** die aktive Antriebseinheit (84) einen elektrischen Antrieb zum Steuern der Bewegung des bewegbaren Verschlusselements (36) aufweist.

6. System gemäß irgendeinem der Ansprüche 2 bis 5, **dadurch gekennzeichnet, dass** die aktive Antriebseinheit Regelungsmittel aufweist, die in der Lage sind, die Bewegung des bewegbaren Verschlusselements (36) zwischen seiner Einschließposition und seiner Ausgabeposition gemäß einem vorbestimmten Bewegungsprofil zu steuern.

7. System (18) gemäß irgendeinem der vorhergehenden Ansprüche, **dadurch gekennzeichnet, dass** die Steuermittel (38) aufweisen: einen Dreharm (80), der an dem Körper (30) montiert ist, und ein Zwischenverbindungselement (82), das einerseits an dem Dreharm (80) und andererseits an dem bewegbaren Verschlusselement (36) gelenkig gelagert ist.

8. System (18) gemäß irgendeinem der vorhergehenden Ansprüche, **dadurch gekennzeichnet, dass** die Stromaufwärtskammer (32) mit der Stromabwärtskammer (34) über eine Zwischenöffnung (49) verbunden ist, die in dem Körper begrenzt ist, wobei das bewegbare Verschlusselement (36) über die Zwischenöffnung (49) bewegbar montiert ist.

9. System (18) gemäß Anspruch 8, **dadurch gekennzeichnet, dass** das bewegbare Verschlusselement (36) aufweist: einen Verschlussabschnitt (70) mit einem Querschnitt, der im Wesentlichen mit dem Querschnitt der Zwischenöffnung (49) verbunden ist, und einen Verbindungsabschnitt (74A, 74B) mit einem Querschnitt, der kleiner als der Querschnitt der Zwischenöffnung (49) ist, wobei der Verschlussabschnitt (70) in der Einschließposition in der Zwischenöffnung (49) angeordnet ist, wobei der Verbindungsabschnitt (74A, 74B) in der Ausgabeposition in der Zwischenöffnung (49) angeordnet ist.

10. System (18) gemäß Anspruch 9, **dadurch gekennzeichnet, dass** der Körper eine Hülle (46A, 46B) zum Führen des bewegbaren Verschlusselements aufweist, wobei das bewegbare Verschlusselement einen Führungsabschnitt (72A, 72B) aufweist, wobei der Zwischenabschnitt (74A, 74B) zwischen dem Führungsabschnitt (72A, 72B) und dem Verschlussabschnitt (70) angeordnet ist.

11. System (18) gemäß irgendeinem der vorhergehenden Ansprüche, **dadurch gekennzeichnet, dass** der Körper (30) eine Not-Evakuierungs-Leitung (90) für das Antriebsgas in der Einschließposition des bewegbaren Verschlusselements (36) begrenzt, wobei die Not-Evakuierungs-Leitung (90) in die Stromaufwärtskammer (32) einmündet, wobei die Ausgabevorrichtung (26) ein lösbares Element (92) zum Verschließen der Not-Evakuierungs-Leitung (92) aufweist, das in der Lage ist, sich jenseits eines gegebenen Drucks in der Stromaufwärtskammer (32) zu lösen, wenn sich das bewegbare Verschlusselement (36) in seiner Einschließposition befindet.

12. Einheit zum Ausstoßen (12) einer Mitnahmevorrichtung (14), die von einem Luftfahrzeug (10) getragen wird, aufweisend:
- einen pneumatischen Antrieb (16) zum Ausstoßen der Mitnahmevorrichtung (14),
- ein System (18) zum Ausgeben von Antriebsgas gemäß irgendeinem der vorhergehenden Ansprüche, wobei die Stromabwärtskammer (34) hydraulisch mit dem pneumatischen Antrieb (16) verbunden ist.

13. Verfahren zum Ausgeben eines Antriebsgases, das vorgesehen ist, um einen pneumatischen Antrieb (16) zu versorgen, aufweisend die folgenden Schritte:
- Bereitstellen eines Systems (18) gemäß irgendeinem der Ansprüche 1 bis 11,
- bei Empfangen eines ersten Zündbefehls Aktivieren des pyrotechnischen Antriebsgasgenerators (24), um Antriebsgas zu generieren,
- Bereitstellen des Antriebsgases in der Stromaufwärtskammer (32), wobei sich das bewegbare Verschlusselement (26) in seiner Einschließposition befindet,
- bei Empfangen eines zweiten Öffnungsbefehls unabhängig von dem Antriebsgas, das auf das bewegbare Verschlusselement (26) einwirkt, Aktivieren der Steuermittel (38), um das bewegbare Verschlusselement (26) aus seiner Einschließposition in seine Ausgabeposition zu bewegen,
- Leiten des Antriebsgases aus der Stromaufwärtskammer (32) in die Stromabwärtskammer (34).

14. Verfahren gemäß Anspruch 13, **dadurch gekennzeichnet, dass** die Steuermittel (38) das bewegbare Verschlusselement (36) in seiner Einschließposition halten, bis der Druck in der Stromaufwärtskammer (32) einen Wert von mindestens größer als 200 bar erreicht, wobei der zweite Öffnungsbefehl erteilt wird, wenn der Druck größer als 200 bar ist.

15. Verfahren gemäß Anspruch 14, **dadurch gekennzeichnet, dass** der Körper (30) in der Einschließposition des bewegbaren Verschlusselements (36) eine Not-Evakuierungs-Leitung (90) für das Antriebsgas begrenzt, wobei die Not-Evakuierungs-Leitung (90) in die Stromaufwärtskammer (32) einmündet, wobei die Ausgabevorrichtung (26) ein lösbares Element (92) zum Verschließen der Not-Evakuierungs-Leitung (90) aufweist, das in der Lage ist, jenseits eines gegebenen Drucks in der Stromaufwärtskammer (32) gelöst werden, wenn sich das bewegbare Verschlusselement (36) in seiner Einschließposition befindet,
wobei das Verfahren das Lösen des lösbaren Schließelements (92) und das Evakuieren des sich unter Druck befindenden in der Stromaufwärtskammer (32) enthaltenen Steuergases in die Atmosphäre durch die Not-Evakuierungs-Leitung (90) hindurch aufweist, wobei das bewegbare Verschlusselement (36) in seiner Einschließposition verbleibt.

## Claims

1. A system (18) for dispensing an actuating gas intended to feed a pneumatic actuator (16) of the type comprising:
- a pyrotechnical generator (24) of actuating gas;
- a dispenser (26) comprising:
• a body (30) defining an upstream chamber (32) to receive actuating gas and connected to the pyrotechnical generator (24), and an outlet downstream chamber (34) intended to be hydraulically connected to the pneumatic actuator (16);
• a mobile shutoff member (36) which can be moved inside the body (30) between a confinement position of the actuating gas in the upstream chamber (32) and a dispensing position of the actuating gas from the upstream chamber (32) towards the downstream chamber (34) ;
**characterized in that** the dispenser (26) comprises means (38) for controlling the movement of the mobile shutoff member (36) between its confinement position and its dispensing position that are capable of moving the mobile shutoff member (36) independently of the actuating gas applied onto the mobile shutoff member (36)
and **in that** the control means (38) are capable of holding the mobile shutoff member (36) in its confinement position after receiving a first ignition order in which the pyrotechnical generator (24) of actuating gas is activated to generate actuating gas, then are capable to be activated on receipt of a second opening order independently of the actuating gas being applied onto the mobile shutoff member (36), to move the mobile shutoff member (36) from its confinement position to its dispensing position.

2. The system (18) according to claim 1, **characterized in that** the control means (38) comprise an active actuating assembly able to be controlled independently of the actuating gas, between an inactive state holding the mobile shutoff member (36) in its confinement position and an activated state actuating the mobile shutoff member (36) towards the dispensing position.

3. The system (18) according to any of the preceding claims, **characterized in that** the active actuation assembly comprises a mechanical actuator (84).

4. The system (18) according to claim 3, **characterized in that** the mechanical actuator (84) comprises an elastic member (86) urging the mobile shutoff member (36) towards its dispensing position, and a releasable member (88) immobilising the mobile shutoff member (36) in its confinement position against the elastic urging member (86).

5. The system according to any of claims 1 or 2, **characterized in that** the active actuation assembly (84) comprises an electric actuator driving the movement of the mobile shutoff member (36).

6. The system according to any of claims 2 to 5, **characterized in that** the active actuation assembly comprises servo means capable of driving the movement of the mobile shutoff member (36) between its confinement position and its dispensing position according to a predetermined travel profile.

7. The system (18) according to any of the preceding claims, **characterized in that** the control means (38) comprise a rotating arm (80) mounted on the body (30), and an intermediate connecting member (82) hinged firstly on the rotating arm (80) and secondly on the mobile shutoff member (36).

8. The system (18) according to any of the preceding claims, **characterized in that** the upstream chamber (32) is connected to the downstream chamber (34) by an intermediate opening (49) delimited in the body, the mobile shutoff member (36) being mounted mobile through the intermediate opening (49).

9. The system (18) according to claim 8, **characterized in that** the mobile shutoff member (36) comprises a shutoff section (70) of cross-section substantially conjugate with the cross-section of the intermediate opening (49), and a connecting section (74A, 74B) of cross-section smaller than the cross-section of the intermediate opening (49), the shutoff section (70) being arranged in the intermediate opening (49) in the confinement position, the connecting section (74A, 74B) being arranged in the intermediate opening (49) in the dispensing position.

10. The system (18) according to claim 9, **characterized in that** the body comprises a jacket (46A, 46B) guiding the mobile shutoff member, the mobile shutoff member comprising a guiding section (72A, 72B), the intermediate section (74A, 74B) being arranged between the guiding section (72A, 72B) and the shutoff section (70).

11. The system (18) according to any of the preceding claims, **characterized in that** the body (30) delimits an emergency evacuation duct (90) for the actuating gas in the confinement position of the mobile shutoff member (36), the emergency evacuation duct (90) opening into the upstream chamber (32), the dispenser (26) comprising a releasable member (92) closing the emergency evacuation duct (92) and capable of being released over and above a given pressure in the upstream chamber (32) when the mobile shutoff member (36) occupies its confinement position.

12. An ejection assembly (12) for ejecting a load (14) carried by an aircraft (10) comprising:
- a pneumatic actuator (16) for ejecting the load (14);
- a system (18) for dispensing actuating gas according to any of the preceding claims, the downstream chamber (34) being hydraulically connected to the pneumatic actuator (16).

13. A method for dispensing an actuating gas intended to feed a pneumatic actuator (16), comprising the following steps:
- providing a system (18) according to any of claims 1 to 11;
- on receiving a first ignition order, activation of the pyrotechnical generator (24) of actuating gas to generate actuating gas;
- supplying actuating gas to the upstream chamber (32), the mobile shutoff member (26) occupying its confinement position;
- on receiving a second opening order, independently of the actuating gas being applied onto the mobile shutoff member (26), activation of the control means (38) to move the mobile shutoff member (26) from its confinement position to its dispensing position;
- passing of the actuating gas from the upstream chamber (32) towards the downstream chamber (34).

14. The method according to claim 13, **characterized in that** the control means (38) hold the mobile shutoff member (36) in its confinement position until the pressure in the upstream chamber (32) reaches a value at least higher than 200 bars, the second opening order being given when the pressure is higher than 200 bars.

15. The method according to claim 14, **characterized in that** the body (30) delimits an emergency evacuation duct (90) for the actuating gas in the confinement position of the mobile shutoff member (36), the emergency evacuation duct (90) opening into the upstream chamber (32), the dispenser (26) comprising a releasable member (92) closing the emergency evacuation duct (90) and capable of being released over and above a given pressure in the upstream chamber (32) when the mobile shutoff member (36) occupies its confinement position,
the method comprising the release of the releasable closing member (92) and the evacuation of the pressurised actuating gas contained in the upstream chamber (32) towards the atmosphere through the emergency evacuation duct (90), the mobile shutoff member (36) remaining in its confinement position.
